(19) Europäisches Patentamt
European Patent Office
Office européen des brevets

(11) **EP 2 562 561 B1**

(12) **EUROPEAN PATENT SPECIFICATION**

(45) Date of publication and mention
of the grant of the patent:
**14.05.2014 Bulletin 2014/20**

(51) Int Cl.:
***G01S 19/40*** *(2010.01)*

(21) Application number: **12178311.2**

(22) Date of filing: **27.07.2012**

(54) **Method and apparatus for receiving positioning signals based on pseudorange corrections**

Verfahren und Vorrichtung zum Empfangen von Positionierungssignalen basierend auf Pseudostreckenkorrekturen

Procédé et appareil permettant de recevoir des signaux de positionnement sur la base des corrections de pseudo-distance

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2011 GB 201113014**

(43) Date of publication of application:
**27.02.2013 Bulletin 2013/09**

(73) Proprietor: **Samsung Electronics Co., Ltd.
Suwon-si, Gyeonggi-do, 443-742 (KR)**

(72) Inventor: **Hadef, Mahmoud
Staines, Middlesex TW18 4QE (GB)**

(74) Representative: **Birchenough, Lewis et al
Harrison Goddard Foote LLP
Saviour House
9 St Saviourgate
York YO1 8NQ (GB)**

(56) References cited:
**US-A- 5 680 140        US-A- 5 978 735
US-A1- 2007 159 384**

## Description

## BACKGROUND OF THE INVENTION

### 1. Field of the Invention

The present invention relates generally to receiving positioning signals, and more particularly, to calculating pseudoranges to a plurality of sources from which positioning signals are received, and determining a correction to be applied to each pseudorange.

### 2. Description of the Related Art

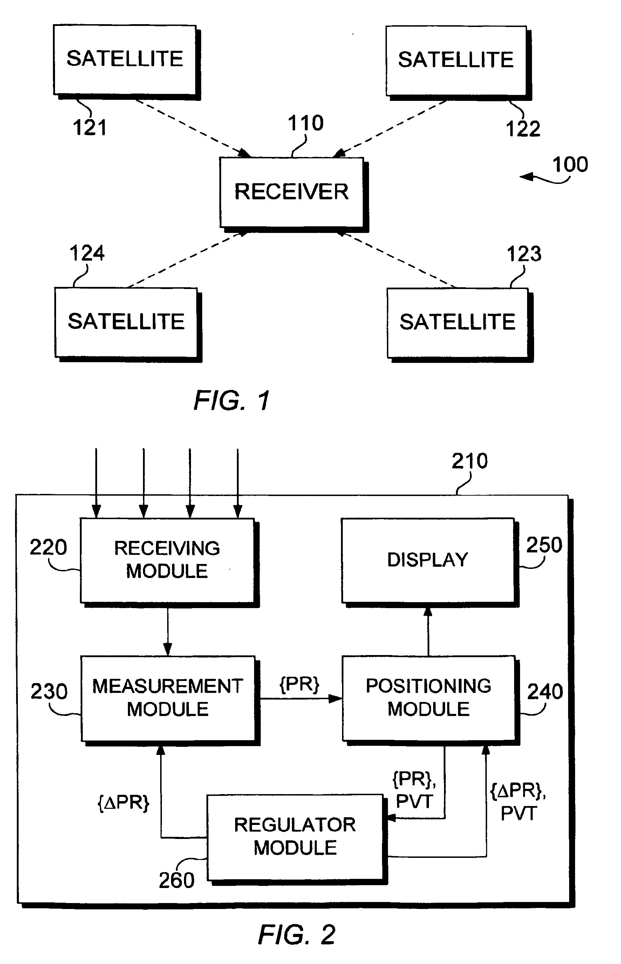

FIG. 1 illustrates a conventional Global Navigation Satellite System (GNSS). The system 100 includes a plurality of satellites 121, 122, 123, 124 and a receiver 110 which receives positioning signals from the plurality of satellites. In FIG. 1, four satellites are shown, but more satellites may be provided for improved accuracy/redundancy. The receiver 110 calculates its position using triangulation, by estimating a distance to each satellite based on the travel time of a signal received from the satellite. The estimated distance to a satellite is referred to as the "pseudorange". An error in a pseudorange measurement can lead to the position being incorrectly calculated.

In practice, the receiver 110 has to receive signals from more than three or four satellites, for a two- or three-dimensional position fix, respectively, to ensure accurate and reliable positioning. Redundant satellites can provide better geometry, allowing the Dilution Of Precision (DOP) to be improved. However, in many situations, for example in urban areas, the receiver may not have access to redundant satellites. In this case, the receiver must wait until more satellites are acquired before calculating its position, and hence the Time-To-First-Fix (TTFF) is increased. The alternative is to use the small number of satellites that are available, which carries a high risk of producing an inaccurate position fix.

US 5978735 describes a satellite navigation method for a mobile station. US 5680140 describes a technique for post-processing of inverse differential corrections for Satellite Positioning System mobile stations. US 2007/0159384 A1 describes a technique for satellite-based positioning of mobile terminals.

## SUMMARY OF THE INVENTION

Accordingly, an aspect of the present invention is to solve the above-mentioned problems occurring in the prior art, and is to provide a method and apparatus for calculating pseudoranges to a plurality of sources from which positioning signals are received, and determining a correction to be applied to each pseudorange.

According to the present invention, there is provided a method for use in a receiver configured to receive positioning signals, which includes: obtaining an initial pseudorange measurement to each one of a plurality of sources from which the positioning signals are received based on the travel time of the received positioning signals; obtaining an initial value of a positioning parameter based on the initial pseudoranges; obtaining a difference between the initial value of the positioning parameter and a reference value of the positioning parameter; obtaining a parameter error for each of the sources, by adjusting the initial pseudorange for the source by an adjustment value, obtaining an adjusted value of the positioning parameter based on the adjusted pseudorange for the source and the initial pseudoranges for a remainder of the plurality of sources, and obtaining an error between the adjusted and the initial values of the positioning parameter; and obtaining, for each source, a pseudorange correction based on the difference between the initial and the reference values of the positioning parameter, the parameter error for the source and the adjustment value.

According to the present invention there is also provided a computer-readable storage medium storing a computer program which, when executed on a processor, causes the processor to perform the method.

According to the present invention, there is further provided a receiver including a receiving module for receiving positioning signals from a plurality of sources; a pseudorange determining module for obtaining an initial pseudorange measurement to each one of the plurality of sources based on the travel time of the received positioning signals; a positioning module for obtaining an initial value of a positioning parameter based on the initial pseudoranges, a parameter difference obtaining module for obtaining a difference between the initial and reference values of the positioning parameter; a parameter error determining module for obtaining a parameter error for each one of the sources, by adjusting the initial pseudorange for the source by an adjustment value, obtaining an adjusted value of the positioning parameter based on the adjusted pseudorange for the source and the initial pseudoranges for a remainder of the plurality of sources, and obtaining an error between the adjusted and the initial values of the positioning parameter; and a pseudorange correction module for obtaining, for each source, a pseudorange correction based on the difference between the initial and reference values of the positioning parameter, the parameter error for the source and the adjustment value.

**BRIEF DESCRIPTION OF THE DRAWINGS**

The above aspects and features of the present invention will now be described, by way of example only, with reference to the accompanying drawings, in which:

FIG. 1 illustrates a conventional satellite navigation system;
FIG. 2 illustrates a receiver for use in a satellite navigation system, according to an embodiment of the present invention;
FIG. 3 illustrates a method for use in a receiver, according to an embodiment of the present invention;
FIG. 4 illustrates the structure of the receiver of FIG. 2 in further detail;
FIG. 5 illustrates a method of calculating a pseudorange correction for each one of a plurality of satellites, according to an embodiment of the present invention; and
FIG. 6 illustrates a method of using pseudorange corrections to improve code tracking, according to an embodiment of the present invention.

**DETAILED DESCRIPTION OF EMBODIMENTS OF THE INVENTION**

Hereinafter, embodiments of the present invention will be described with reference to the accompanying drawings. In the following description, the same elements will be designated by the same reference numerals although they are shown in different drawings. In the drawings, the thickness of lines and sizes of components may be exaggerated for the clarity and convenience of description. The terminologies used hereinbelow are those defined in consideration of functions in the present invention, and different terminologies may be used in accordance with an intention of a user or an operator or a practice. Further, a detailed description of known functions and configurations incorporated herein will be omitted for the sake of clarity and conciseness.

FIG. 2 illustrates a receiver for use in a satellite navigation system, according to an embodiment of the present invention. The receiver 210 comprises a receiving module 220 for receiving positioning signals from a plurality of satellites, a measurement module 230 for calculating PseudoRange (PR) measurements based on the received signals, a positioning module 240 for determining a current position of the receiver based on the calculated pseudoranges and calculating a current value of a positioning parameter such as Position, Velocity or Time (PVT), and a display 250 for displaying the current position to a user.

The receiver 210 further comprises a regulator module 260, which receives positioning information and pseudorange information from the positioning module 240, and determines a correction ($\Delta$PR) to be applied to each pseudorange measurement. The regulator module 260 can send information about the $\Delta$PR corrections to be applied back to the measurement module 230 and/or the positioning module 240. For example, the positioning module 240 can use the $\Delta$PR corrections to more accurately calculate the current position, or the regulator module 260 could calculate corrected PVT information using the $\Delta$PR corrections and send the corrected PVT information to the positioning module 240.

Although a particular structure of the receiver 210 is schematically illustrated in FIG. 2, the present invention is not limited thereto. In other embodiments, the functionality of the modules shown in FIG. 2 may be combined in, or divided amongst, one or more modules. Each module may be embodied as a software module executed on a processor, or may be a physically separate module. For example, one or more of the modules may be implemented in an Application-Specific Integrated Circuit (ASIC) or a Field-Programmable Gate Array (FPGA) configured to perform the desired function.

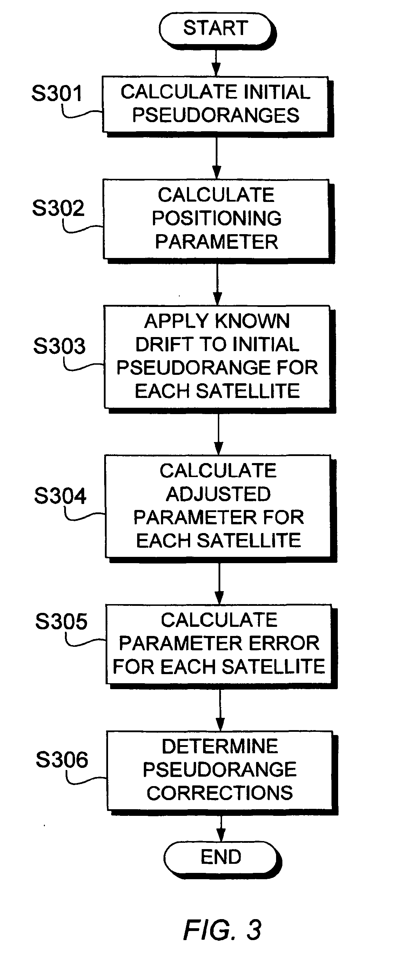

FIG. 3 illustrates a method for use in a receiver configured to receive positioning signals, according to an embodiment of the present invention. The method can be implemented by a receiver such as in FIG. 2. The method may, for example, be executed whenever the receiver calculates updated pseudoranges to a plurality of satellites from which positioning signals are received, or may be executed periodically at time intervals.

In step S301, the receiver calculates an initial pseudorange to each one of the satellites using a conventional method, based on the travel time of the received signal. In step S302, the receiver calculates a value of a positioning parameter $R$ using the initial pseudoranges. The positioning parameter $R$ may be any parameter related to the receiver's location, such as longitude, latitude, altitude, velocity, and DOP. The positioning parameter $R$ may, for example, be derived from PVT information calculated by a PVT estimator using a conventional method, based on the pseudoranges calculated in step S301. At this point, the receiver also calculates a parameter offset, which is the difference between the initial value of the positioning parameter and a known reference value of the positioning parameter.

The known reference value could be obtained for the parameter from a previous fix. The particular positioning parameter used may be assumed to remain substantially constant over a time interval between fixes. For example, during use the value of the height parameter may not vary significantly from one moment to the next, and so it may be assumed that the current height should match the previously determined value of the height. Similarly, the velocity may also be expected to remain substantially constant in many cases, for example when the receiver is used onboard an aircraft. However, the present invention is not limited to the use of height or velocity as the positioning parameter, and other parameters may be used instead. In some embodiments, the known reference value of the positioning parameter may be determined by other means. For example, height could be measured using an altimeter.

Once the receiver has calculated the positioning parameter $R$, an updated value of the positioning parameter is calculated for each satellite by applying a known drift to the initial pseudorange measurement. Specifically, in step S303, for each satellite a known drift $L$ is added to the initial pseudorange. The same value of the known drift $L$, which may be a positive or negative value, may be used for all satellites. Different values of the drift $L$ may be applied to the pseudorange measurements for different satellites.

In step S304, an adjusted value of the positioning parameter $R$ is calculated for each satellite. Specifically, updated PVT information for an $n^{th}$ one of the satellites is calculated using the adjusted pseudorange for the $n^{th}$ satellite, $PR_n$, and the initial pseudoranges for the remainder of the satellites, i.e. the set of pseudoranges $\{PR_m, m{\neq}n\}$. The adjusted value of the positioning parameter $R$ for the $n^{th}$ satellite is then calculated based on the updated PVT information. Because the updated PVT information is calculated based on the adjusted pseudorange for the $n^{th}$ satellite, and the initial (i.e. not adjusted) pseudoranges for the remaining satellites, any discrepancy between the adjusted value of the positioning parameter $R$ and the initial value calculated in step S302 can be attributed to the effect of adding the known drift $L$ to the pseudorange measurement of the $n^{th}$ satellite. Therefore, the known drift $L$ can be used as an actuator to determine the error contribution of each satellite to the estimated PVT.

In step S305, the difference between the adjusted value of the positioning parameter and the initial value of the positioning parameter is calculated for each satellite. The difference may be referred to as a parameter error value $\Delta R_n$, i.e. the error introduced to the positioning parameter $R$ by adding the known drift $L$ to the PR measurement of the $n^{th}$ satellite.

In step S306, a pseudorange correction $\Delta PR$ is determined for each satellite. The $\Delta PR$ values may be calculated based on the parameter offset calculated in step S302, the calculated parameter error for the source and the value. The pseudorange corrections may be determined using an error propagation model to assess the contribution of each satellite to the overall error in the positioning parameter. The overall PVT output can then be compensated accordingly, if required. The pseudorange corrections $\Delta PR$ for the plurality of satellites may be used in several manners by various modules within the receiver. For example, a corrected pseudorange can be calculated for each satellite by applying the relevant correction to the initial pseudorange measurement for that satellite. Corrected PVT information can then be calculated based on the corrected pseudoranges. Other possible applications of the $\Delta PR$ corrections include improving code tracking for the received positioning signals, selecting satellites with the lowest $\Delta PR$ corrections for use in calculating PVT information, and detecting/eliminating multipath effects.

Embodiments of the present invention can improve the PVT accuracy in situations where basic checking algorithms such as Receiver Autonomous Integrity Monitoring (RAIM) are unable to operate. For example, when only three or four satellites are available with poor DOP, a receiver may use a method such as that of FIG. 3 to apply corrections to the pseudoranges in order to improve the PVT accuracy and reduce the DOP.

The steps of adjusting the initial pseudorange, calculating an adjusted value of the positioning parameter, and calculating the parameter error, may be performed concurrently for all satellites. That is, the satellites may be processed in parallel. For example, the regulator engine may include a plurality of pipelines, one being assigned to each one of the plurality of satellites. Alternatively, the satellites may be processed sequentially in order until all satellites have been processed, i.e. the satellites may be processed in series.

As discussed above, the method of FIG. 3 may be executed whenever the receiver calculates updated pseudoranges, or may be executed periodically at time intervals. In certain embodiments, the method may be performed conditionally on the parameter offset calculated at step S302. Specifically, the subsequent steps S303 to S306 of FIG. 3 may only be carried out if the deviation from the target value exceeds a threshold value, which is determined during testing and calibration. That is, if the deviation is below the threshold, it is determined that the current position is a good fix, and it is not required to calculate the pseudorange corrections. If the deviation is above the threshold, it is determined that the current position is a poor fix, and the receiver can proceed to calculate the pseudorange corrections in order to improve the accuracy of the fix.

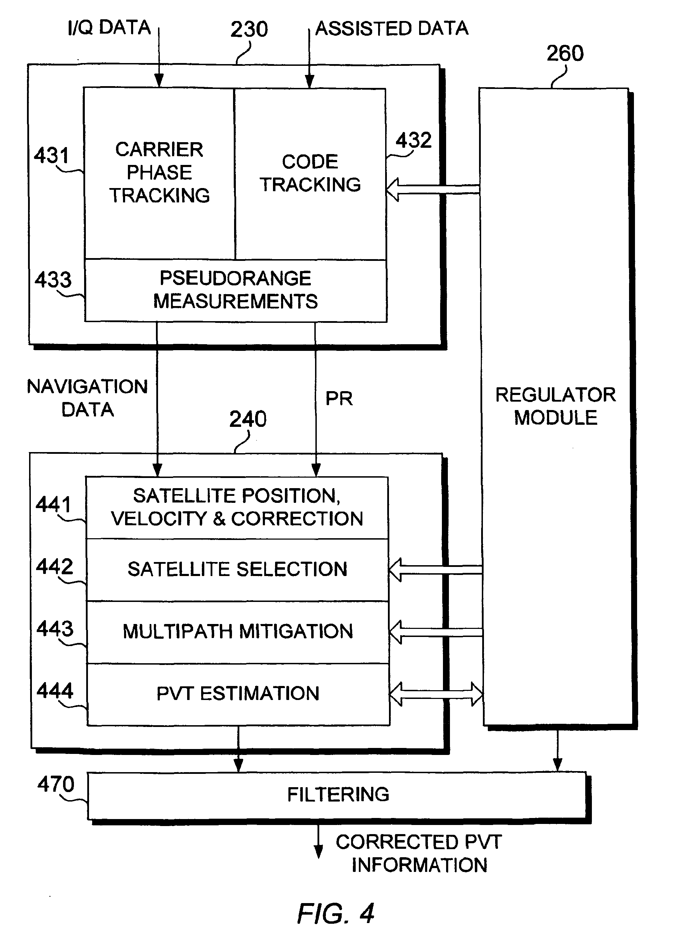

FIG. 4 illustrates the structure of the receiver of FIG. 2 in further detail. The regulator module 260 can receive PVT information and initial pseudoranges from the positioning module 240, and execute a method such as that of FIG. 3 to determine the set pseudorange corrections $\{\Delta PR\}$ for the available satellites.

As shown in FIG. 4, the measurement module 230 includes a carrier phase tracking module 431, a code tracking module 432, and a pseudorange measurement module 433. The carrier phase tracking module 431 is configured to receive I/Q data from the receiving module and track the phase of a carrier wave with which the received signal is modulated. The code tracking module 432 is configured to receive assisted data from the receiving module, and track the phase of a PseudoRandom Number (PRN) code of a received signal. The code tracking module 432 can receive the pseudorange corrections from the regulator module 260, and use the pseudorange corrections to more accurately track the code within a received positioning signal by determining phase corrections based on the pseudorange corrections. The carrier phase tracking module 431 and code tracking module 432 enable a positioning signal to be correctly received and decoded. The pseudorange measurement module 433 determines the pseudorange to each one of a plurality of satellites from which the positioning signals are received, by determining the time elapsed between a signal being transmitted by the satellite and received by the receiving module.

The positioning module 240 includes a satellite position, velocity and correction module 441, a satellite selection module 442, a multipath mitigation module 443, and a PVT estimation module 444. The satellite position, velocity and correction module 441 receives navigation data and PR measurements from the measurement module 230. The navigation data may be extracted from the positioning signals, and may include information about the satellite's orbit. The satellite position, velocity and correction module 441 can use the navigation data to determine the location of each satellite at the time when the positioning signal from that satellite was transmitted.

The satellite selection module 442 can select a subset of available satellites to be used in calculating PVT information. The satellite selection module 442 is configured to receive the pseudorange corrections from the regulator module 260, and select a number of the available satellites with the lowest pseudorange correction values. This can ensure that those satellites having the highest pseudorange correction values, i.e. which strongly contribute to positioning parameter errors, are not used when calculating the PVT information. The satellite selection module 442 can also exclude satellites based on other parameters. For example, a satellite that is known to be faulty may automatically be excluded regardless of whether a high or low pseudorange correction is determined for that satellite.

The multipath mitigation module 443 detects and compensates for multipath effects in the received signals, which may lead to pseudoranges being incorrectly calculated. The multipath mitigation module 443 is configured to receive the pseudorange corrections from the regulator module 260 and use the pseudorange corrections to more accurately evaluate and compensate the multipath effects.

The PVT estimation module 444 receives the satellite position information and pseudoranges, which have been corrected for multipath effects by the multipath mitigation module 443, for the satellites selected by the satellite selection module 442. The PVT estimation module 444 uses this information, along with the pseudorange corrections (or corrected pseudoranges) received from the regulator module 260, to calculate updated PVT information.

The updated PVT information is filtered by a filtering module 470 to produce corrected PVT information, which may be sent to a display to be presented to a user.

By utilizing the regulator module 260 to determine a correction to be applied to the pseudorange for each satellite, the receiver according to the present embodiment can provide accurate positioning information even when redundant satellites, i.e. a number of satellites in excess of the minimum number required to calculate a position, are not available. For example, the regulator module 260 can enable faster convergence and TTFF in urban scenarios, in comparison to a conventional receiver.

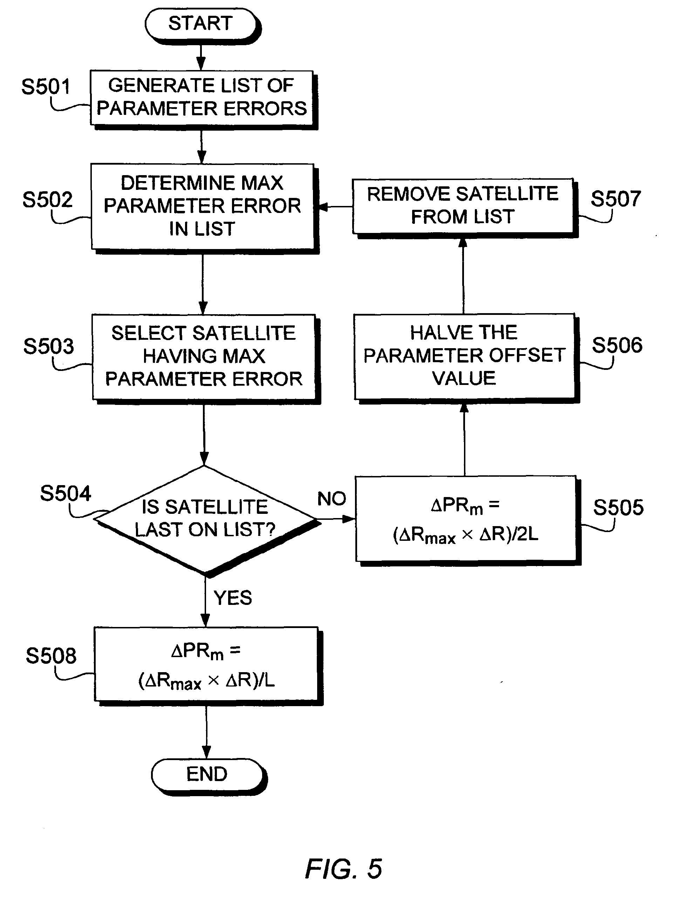

FIG. 5 illustrates a method of calculating a pseudorange correction for each one of a plurality of satellites, according to an embodiment of the present invention. The method may, for example, be used at step S306 of the method of FIG. 3.

In step S501, a list is generated including the calculated parameter errors for each satellite (see step S305 in FIG. 3), wherein each parameter error in the list is associated with information identifying the satellite to which it corresponds. In step S502, the maximum parameter error in the list is identified, and in step S503, the satellite corresponding to the maximum parameter error in the list is selected. Selecting a satellite indicates that subsequent steps are performed on quantities relating to the selected satellite, until a different satellite is selected. In the present example, the selected satellite is denoted using the subscript 'm'.

In step S504, it is determined whether the selected satellite is the last satellite remaining on the list, i.e. whether any other satellites are still included in the list. If the selected satellite is not the last remaining satellite in the list, then in step S505 the pseudorange correction $\Delta PR_m$ is calculated based on Equation (1), as follows:

$$\Delta PR_m = \left( \frac{\Delta R_{max} \times \Delta R}{2L} \right)$$

$$\dots\dots(1)$$

wherein $\Delta R_{max}$ is the maximum parameter error of the satellites remaining on the list, i.e. the parameter error of the selected $m^{th}$ satellite, $\Delta R$ is the difference between the initial value of the positioning parameter and the reference value of the positioning parameter, and $L$ is the value, i.e. the drift applied to the pseudorange. If different values of the drift $L$ are applied to different satellites, the value of $L$ may be the value of $L$ applied to the $m^{th}$ satellite.

In step S506, the parameter offset value is halved. The parameter offset is the difference between the initial value of the positioning parameter and the reference value of the positioning parameter. In general, in step S506 the parameter offset value may be reduced by an amount, such as by a third. Equation (1) may be modified accordingly. For example, if the parameter offset value is reduced by a third in step S506, i.e. multiplied by 2/3, the factor of two in the denominator may be replaced by a factor of three.

In step S507, the parameter error for the currently selected satellite is removed from the list. The process then returns to step S502, and performs the subsequent steps.

If, in step S504, it is determined that the currently selected satellite is the final satellite on the list, then the receiver proceeds to step S508 and determines the pseudorange correction based on Equation (2), as follows:

$$\Delta PR_m = \left( \frac{\Delta R_{max} \times \Delta R}{L} \right) \qquad\qquad ........(2)$$

At this point, all satellites on the original list have been processed, and all ΔPRs have been calculated. The pseudorange corrections can subsequently be used as described with reference to FIG. 4.

Effectively, the method of FIG. 5 obtains a pseudorange correction for a satellite based on a portion of the parameter offset, i.e. the difference between the initial value and known reference value of the positioning parameter. The parameter error for the satellite is divided by the known drift $L$ to give an effective error per unit of drift, which may be indicative of the contribution of the satellite to the overall error. In the present embodiment, the portion is half the total parameter offset value, hence the factor of two that appears in step S505. That is, in the method of FIG. 5, half of the total parameter offset is apportioned to the satellite having the highest parameter error, then half of the remaining portion of the parameter offset (i.e. one quarter of the total parameter offset) is apportioned to the satellite having the next highest parameter error, and so on.

However, the present invention is not limited to the method of FIG. 5, and other methods may be used. For example, instead of processing the satellites in order of highest parameter error, the satellites may be processed in a different order, such as omitting the step of determining the maximum parameter error in the list, and selecting the satellite to be processed. Also, instead of dividing the total parameter offset amongst the satellites as shown in FIG. 5, in some embodiments the parameter offset (i.e. the deviation from the target reference value) could be apportioned equally amongst all satellites, and the satellites could be processed in any order or in parallel. In this case, the factor of two in step S505 could be replaced by the total number of satellites $N$. In general, the pseudorange correction may be obtained using any method based on the difference between the initial value of the positioning parameter and the reference value of the positioning parameter ($\Delta R$ in steps S505 and S508), the parameter error for the source ($\Delta R_{max}$ in steps S505 and S508) and the drift $L$ value.

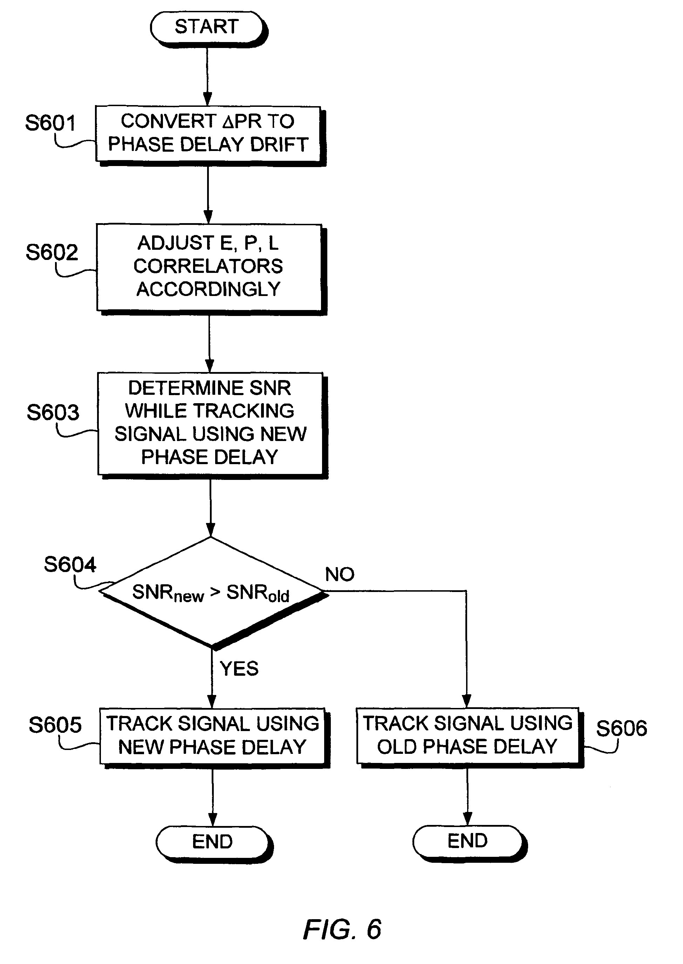

FIG. 6 illustrates a method of using pseudorange corrections to improve code tracking, according to an embodiment of the present invention. The method may, for example, be implemented in the code tracking module of FIG. 4. As described above, positioning signals from a satellite may include a PRN code. In order to correctly discriminate the signal it is necessary to identify and track the phase of the code in the received signal.

In step S601, a pseudorange correction for the satellite for which code tracking is to be performed is converted to a phase delay drift, which accounts for a phase difference that would be expected if the distance to the satellite changed by the amount indicated by the pseudorange correction.

In step S602, the early (E), prompt (P) and late (L) correlators are adjusted according to the new phase delay drift calculated in step S603. Typically, the early correlator is configured to mix the received signal with a copy of the PRN code phase-shifted by +1/2 a chip and obtain a correlation value, the prompt correlator is configured to mix the received signal with a copy of the PRN code that is not phase-shifted and obtain a correlation value, and the late correlator is configured to mix the received signal with a copy of the PRN code phase-shifted by -1/2 a chip and obtain a correlation value, although other phase shifts may be used.

In step S603, the signal is tracked using the new phase delay, i.e. with the E, P and L correlators adjusted accordingly. In step S604, a Signal-to-Noise Ratio (SNR) of the signal tracked with the new phase delay is compared against the old SNR, i.e. the SNR of the signal tracked with an old phase delay, before the correlators were adjusted in step S602. If the new SNR is higher than the old value, the receiver proceeds to step S605 and continues to track the signal using the new phase delay calculated in step S601. However, if the new SNR is less than the old SNR, the receiver proceeds to step S606, rejects the phase delay correction, and continues to track the signal using the old phase delay, i.e. the previous setting.

A method such as that of FIG. 6 can allow the code tracking module to adjust loop settings (i.e. phase and frequency used to track the code in the received signal) based on the pseudorange corrections, in order to either speed up their convergence or detect possible incorrect tracking.

Embodiments of the present invention can be used to reduce first-fix and reacquisition times, especially in urban areas. A method such as that of FIG. 3 may help to accelerate convergence of the tracking loops and also provide reliable fixes in earlier stages, ensuring that the positioning module is no longer obliged to wait for optimum conditions to be achieved before arriving at a useable fix. Similarly, embodiments of the present invention may provide improved accuracy over conventional receivers in situations where no redundant satellites are available, and where the DOP is increased due to poor geometry. The effectiveness of other functions, such as multipath mitigation and satellite selection, can also be improved. Additionally, embodiments of the present invention can offer improved accuracy even when only a single fix is provided, where a conventional robust sanity checking algorithm would be unable to operate due to insufficient data being available.

Furthermore, embodiments of the present invention may offer an advantage in dual-mode receivers which can serially switch between different systems, by improving convergence and accuracy of first fixes and reducing the negative impact of the data discontinuity when switching between modes.

Although embodiments of the present invention have been described with reference to Global Navigation Satellite System (GNSS) such as the Global Positioning System (GPS), the invention is not limited to use in GPS receivers. In other embodiments, the receiver may be configured to receive positioning signals from sources other than satellites. For example, a receiver may be configured to receive WiFi, Base Station, or eloran signals from a plurality of sources, calculate pseudoranges and determine pseudorange corrections in a manner similar to the GNSS receiver shown in FIGs. 2 and 4.

While certain embodiments of the present invention have been described above, the skilled person will understand that many variations and modifications are possible without departing from the scope of the invention as defined in the accompanying claims.

## Claims

1. A method for use in a receiver (110) configured to receive positioning signals, the method comprising:

   obtaining (S301) an initial pseudorange measurement to each one of a plurality of sources (121-124) from which the positioning signals are received based on the travel time of the received positioning signals;
   obtaining (S302) an initial value of a positioning parameter based on the initial pseudoranges;
   obtaining a difference between the initial value of the positioning parameter and a reference value of the positioning parameter;
   obtaining a parameter error for each one of the sources (121-124), by adjusting (S303) the initial pseudorange for the source (121-124) by an adjustment value, obtaining (S304) an adjusted value of the positioning parameter based on the adjusted pseudorange for the source (121-124) and the initial pseudoranges for a remainder of the plurality of sources (121-124), and obtaining (S305) an error between the adjusted value of the positioning parameter and the initial value of the positioning parameter; and
   obtaining (S306), for each source (121-124), a pseudorange correction based on the difference between the initial value of the positioning parameter and the reference value of the positioning parameter, the parameter error for the source (121-124) and the adjustment value.

2. The method of claim 1, further comprising:

   determining (S502) a maximum parameter error of the calculated parameter errors for the plurality of sources (121-124),
   wherein obtaining (S306) the pseudorange correction comprises obtaining (S508) the correction based on the parameter error for the source, the maximum parameter error, and the adjustment value.

3. The method of claim 2, wherein obtaining (S306) the pseudorange correction for each source (121-124) comprises:

   generating (S501) a list including the parameter errors for the plurality of sources (121-124);
   determining (S502) the maximum parameter error of the parameter errors in the list;
   obtaining (S505) the pseudorange correction for a first one of the plurality of sources (121-124), based on the parameter error for the first source, the maximum parameter error, and the adjustment value;
   removing (S507) the parameter error for the first source from the list;
   reducing (S506) the parameter errors for a remainder of the plurality of sources (121-124) in the list by a factor; and
   repeating the steps of obtaining (S505) the pseudorange correction for a next one of the plurality of sources (121-124), removing (S507) the parameter error for said next source from the list, and reducing (S506) the parameter errors for the remainder of the plurality of sources (121-124) in the list by the factor, until a pseudorange correction has been obtained for each one of the plurality of sources (121-124).

4. The method of claim 3, wherein reducing (S506) the parameter errors for the remainder of the plurality of sources (121-124) in the list by the factor comprises halving the parameter errors, and
   wherein if a plurality of sources (121-124) remain on the list, obtaining (S306) the pseudorange correction for each source comprises obtaining (S505) the pseudorange correction based on the following Equation

$$\Delta PR_m = \left( \frac{\Delta R_{max} \times \Delta R}{2L} \right),$$

   and if only one source remains on the list, obtaining (S306) the pseudorange correction for said one remaining source comprises obtaining (S508) the pseudorange correction based on the following:

$$\Delta PR_m = \left( \frac{\Delta R_{max} \times \Delta R}{L} \right),$$

   wherein $\Delta PR_m$ is the pseudorange correction for the $m^{th}$ source, $\Delta R_{max}$ is the maximum parameter error of the plurality of sources (121-124) remaining on the list, $\Delta R$ is the difference between the initial value of the positioning parameter and the reference value of the positioning parameter, and $L$ is the adjustment value.

5. The method of any one of the preceding claims, wherein the parameter errors and pseudorange corrections are only obtained if the difference between a initial value and the target value of the positioning parameter is above a threshold.

6. The method of any one of the preceding claims, wherein the positioning signals from the plurality of sources (121-124) include PseudoRandom Number, PRN, codes, the receiver (110) including a tracking module (432) for tracking a phase of the PRN code within a positioning signal received from one of the plurality of sources (121-124), the method further comprising:

   providing the tracking module (432) with the pseudorange correction for the source (121-124);
   obtaining (S602) an updated phase drift for the source (121-124), based on the pseudorange correction for the source (121-124); and
   tracking the phase of the PRN code in the positioning signal received from the source (121-124) using the updated phase drift.

7. The method of claim 6, further comprising:

   obtaining, prior to obtaining (S602) the updated phase drift for the source (121-124), a first Signal-to-Noise Ratio, SNR, of the positioning signal while tracking the phase of the PRN code using an initial phase drift;
   obtaining (S603), after obtaining (S602) the updated phase drift for the source (121-124), a second SNR of the positioning signal while tracking the phase of the PRN code using the updated phase drift; and
   continuing (S605), if the second SNR is higher than the first SNR (S604), to track the PRN code phase using the updated phase drift, and if the second SNR is lower than the first SNR, continuing (S606) to track the PRN code phase using the initial phase drift.

8. The method of any one of the preceding claims, further comprising:

   obtaining a corrected pseudorange to each source (121-124) by applying the pseudorange correction to the initial pseudorange; and
   obtaining corrected positioning information based on the corrected pseudoranges to the plurality of sources (121-124), the positioning information including the positioning parameter.

9. The method of claim 8, further comprising:

selecting ones of the plurality of sources (121-124) to be used when obtaining the positioning information, by selecting a number of the plurality of sources (121-124) having lowest values of the pseudorange correction.

10. The method of any one of the preceding claims, further comprising:

providing a multipath mitigation module (443) with the pseudorange correction for each one of the plurality of sources (121-124),
wherein the receiver (110) includes the multipath mitigation module (443) for detecting multipath effects in the received positioning signals.

11. The method of any one of the preceding claims, wherein the initial pseudoranges for different ones of the plurality of sources (121-124) are adjusted by a same adjustment value.

12. A non-transitory computer-readable storage medium storing a computer program which, when executed on a processor, causes the processor to perform a method for use in a receiver (110) configured to receive positioning signals, the method comprising:

obtaining (S301) an initial pseudorange measurement to each one of a plurality of sources (121-124) from which the positioning signals are received based on the travel time of the received positioning signals;
obtaining (S302) an initial value of a positioning parameter based on the initial pseudoranges;
obtaining a difference between the initial value of the positioning parameter and a reference value of the positioning parameter;
obtaining a parameter error for each one of the sources (121-124), by adjusting (S303) the initial pseudorange for the source (121-124) by an adjustment value, obtaining (S304) an adjusted value of the positioning parameter based on the adjusted pseudorange for the source (121-124) and the initial pseudoranges for a remainder of the plurality of sources (121-124), and obtaining (S305) an error between the adjusted value of the positioning parameter and the initial value of the positioning parameter; and
obtaining (S306), for each source (121-124), a pseudorange correction based on the difference between the initial value of the positioning parameter and the reference value of the positioning parameter, the parameter error for the source (121-124) and the adjustment value.

13. A receiver (110) comprising:

a receiving module (220) for receiving positioning signals from a plurality of sources (121-124);
a pseudorange determining module for obtaining an initial pseudorange measurement to each one of the plurality of sources (121-124) based on the travel time of the received positioning signals;
a positioning module (240) for obtaining an initial value of a positioning parameter based on the initial pseudoranges;
a parameter difference obtaining module for obtaining a difference between the initial value of the positioning parameter and a reference value of the positioning parameter;
a parameter error determining module for obtaining a parameter error for each one of the sources (121-124), by adjusting the initial pseudorange for the source (121-124) by an adjustment value, obtaining an adjusted value of the positioning parameter based on the adjusted pseudorange for the source (121-124) and the initial pseudoranges for a remainder of the plurality of sources (121-124), and obtaining an error between the adjusted value of the positioning parameter and the initial value of the positioning parameter; and
a pseudorange correction module for obtaining, for each source (121-124), a pseudorange correction based on the difference between the initial value of the positioning parameter and the reference value of the positioning parameter, the parameter error for the source and the adjustment value.

14. The receiver of claim 13, wherein the receiver (110) is configured to obtain a corrected pseudorange to each source (121-124) by applying the pseudorange correction to the initial pseudorange, and
wherein the positioning module (240) is configured to obtain corrected positioning information based on the corrected pseudoranges to the plurality of sources (121-124).

15. The receiver of claim 13 or 14, the receiver (110) further comprising:

a tracking module (432) for tracking a phase of the PRN code within a positioning signal received from one of the plurality of sources (121-124),

wherein the tracking module (432) is configured to obtain an updated phase drift for the source (121-124), based on the pseudorange correction for the source (121-124), and track the phase of the PRN code in the positioning signal received from the source (121-124) using the updated phase drift.

16. The receiver of claim 13, 14 or 15, wherein the receiver (110) is configured for use in a global navigation satellite system, GNSS, and the plurality of sources (121-124) are a plurality of satellites in the GNSS.

**Patentansprüche**

1. Verfahren zur Verwendung bei einem Empfänger (110), der so konfiguriert ist, dass er Positionssignale empfängt, wobei das Verfahren Folgendes umfasst:

Gewinnen (S301) eines ursprünglichen Pseudoentfernungsmesswerts zu jeder von mehreren Quellen (121-124), aus denen die Positionssignale empfangen werden, auf der Grundlage der Laufzeit der empfangenen Positionssignale,
Gewinnen (S302) eines ursprünglichen Werts eines Positionsparameters auf der Grundlage der ursprünglichen Pseudoentfernungen,
Gewinnen einer Differenz zwischen dem Anfangswert des Positionsparameters und einem Referenzwert des Positionsparameters,
Gewinnen einer Parameterabweichung für jede der Quellen (121-124) durch Anpassen der ursprünglichen Pseudoentfernung für die Quelle (121-124) um einen Anpassungswert, Gewinnen (S304) eines angepassten Werts für den Positionsparameter auf der Grundlage der angepassten Pseudoentfernung für die Quelle (121-124) und der ursprünglichen Pseudoentfernungen für einen Rest der mehreren Quellen (121-124) und Gewinnen (S305) einer Abweichung zwischen dem angepassten Wert für den Positionsparameter und dem ursprünglichen Wert für den Positionsparameter und
Gewinnen (S306) einer Pseudoentfernungskorrektur für jede Quelle (121-124) auf der Grundlage der Differenz zwischen dem ursprünglichen Wert des Positionsparameters und dem Referenzwert des Positionsparameters, der Parameterabweichung für die Quelle (121-124) und des Anpassungswerts.

2. Verfahren nach Anspruch 1, das ferner Folgendes umfasst:

Ermitteln (S502) einer maximalen Parameterabweichung der berechneten Parameterabweichungen für die mehreren Quellen (121-124),
wobei das Gewinnen (S306) der Pseudoentfernungskorrektur das Gewinnen (S508) der Korrektur auf der Grundlage der Parameterabweichung für die Quelle, der maximalen Parameterabweichung und des Anpassungswerts umfasst.

3. Verfahren nach Anspruch 2, bei dem das Gewinnen (S306) der Pseudoentfernungskorrektur für jede Quelle (121-124) Folgendes umfasst:

Erzeugen (S501) einer Liste mit den Parameterabweichungen für die mehreren Quellen (121-124),
Ermitteln (S502) der maximalen Parameterabweichung der Parameterabweichungen in der Liste,
Gewinnen (S505) der Pseudoentfernungskorrektur für eine erste der mehreren Quellen (121-124) auf der Grundlage der Parameterabweichung für die erste Quelle, der maximalen Parameterabweichung und des Anpassungswerts,
Entfernen (S507) der Parameterabweichung für die erste Quelle aus der Liste,
Reduzieren (S506) der Parameterabweichungen für einen Rest der mehreren Quellen (121-124) in der Liste um einen Faktor und
Wiederholen des Gewinnens (S505) der Pseudoentfernungskorrektur für eine nächste der mehreren Quellen (121-124), des Entfernens (S507) der Parameterabweichung für die nächste Quelle aus der Liste und des Reduzierens (S506) der Parameterabweichungen für den Rest der mehreren Quellen (121-124) in der Liste um einen Faktor, bis für jede der mehreren Quellen (121-124) eine Pseudoentfemungskorrektur gewonnen wurde.

4. Verfahren nach Anspruch 3, bei dem das Reduzieren (S506) der Parameterabweichungen für den Rest der mehreren Quellen (121-124) in der Liste um den Faktor das Halbieren der Parameterabweichungen umfasst und wobei, wenn mehrere Quellen (121-124) auf der Liste verbleiben, das Gewinnen (S306) der Pseudoentfernungskorrektur für jede Quelle das Gewinnen (S505) der Pseudoentfernungskorrektur auf der Grundlage der folgenden Gleichung umfasst:

$$\Delta PR_m = \left( \frac{\Delta R_{max} \times \Delta R}{2L} \right),$$

und, wenn nur eine Quelle auf der Liste verbleibt, das Gewinnen (S306) der Pseudoentfernungskorrektur für die eine verbleibende Quelle das Gewinnen (S508) der Pseudoentfernungskorrektur auf der folgenden Grundlage umfasst:

$$\Delta PR_m = \left( \frac{\Delta R_{max} \times \Delta R}{L} \right),$$

wobei $\Delta PR_m$ die Pseudoentfernungskorrektur für die $m$-te Quelle, $\Delta R_{max}$ die maximale Parameterabweichung der mehreren auf der Liste verbleibenden Quellen (121-124), $\Delta R$ die Differenz zwischen dem ursprünglichen Wert des Positionsparameters und dem Referenzwert des Positionsparameters und $L$ der Anpassungswert ist.

5.  Verfahren nach einem der vorhergehenden Ansprüche, bei dem die Parameterabweichungen und die Pseudoentfernungskorrekturen nur gewonnen werden, wenn die Differenz zwischen einem ursprünglichen Wert und dem Sollwert des Positionsparameters über einem Schwellwert liegt.

6.  Verfahren nach einem der vorhergehenden Ansprüche, bei dem die Positionssignale aus den mehreren Quellen (121-124) PRN-Codes (PRN - PseudoRandom Number) enthalten, wobei der Empfänger (110) ein Nachverfolgungsmodul (432) zum Nachverfolgen einer Phase des PRN-Codes in einem Positionssignal aufweist, das aus einer der mehreren Quellen (121-124) empfangen wurde, wobei das Verfahren ferner Folgendes umfasst:

    Versorgen des Nachverfolgungsmoduls (432) mit der Pseudoentfernungskorrektur für die Quelle (121-124),
    Gewinnen (S602) einer aktualisierten Phasendrift für die Quelle (121-124) auf der Grundlage der Pseudoentfernungskorrektur für die Quelle (121-124) und
    Nachverfolgen der Phase des PRN-Codes in dem aus der Quelle (121-124) empfangenen Positionssignal unter Verwendung der aktualisierten Phasendrift.

7.  Verfahren nach Anspruch 6, das ferner Folgendes umfasst:

    vor dem Gewinnen (S602) der aktualisierten Phasendrift für die Quelle (121-124) Gewinnen eines ersten Signal-Rausch-Abstands (SRA) des Positionssignals beim Nachverfolgen der Phase des PRN-Codes unter Verwendung einer ursprünglichen Phasendrift,
    nach dem Gewinnen (S602) der aktualisierten Phasendrift für die Quelle (121-124) Gewinnen (S603) eines zweiten SRA des Positionssignals beim Nachverfolgen der Phase des PRN-Codes unter Verwendung der aktualisierten Phasendrift und,
    wenn der zweite SNA größer ist als der erste SNA (S604), Fortführen (S605) des Nachverfolgens der PRN-Codephase unter Verwendung der aktualisierten Phasendrift und, wenn der zweite SNA geringer ist als der erste SNA, Fortführen (S606) des Nachverfolgens der PRN-Codephase unter Verwendung der ursprünglichen Phasendrift.

8.  Verfahren nach einem der vorhergehenden Ansprüche, das ferner Folgendes umfasst:

    Gewinnen einer korrigierten Pseudoentfernung zu jeder Quelle (121-124) durch Anwenden der Pseudoentfernungskorrektur auf die ursprüngliche Pseudoentfernung und
    Gewinnen von korrigierten Positionsinformationen auf der Grundlage der korrigierten Pseudoentfernungen zu den mehreren Quellen (121-124), wobei die Positionsinformationen den Positionsparameter enthalten.

9. Verfahren nach Anspruch 8, das ferner Folgendes umfasst:

Auswählen einzelner der mehreren Quellen (121-124), die beim Gewinnen der Positionsinformationen verwendet werden sollen, durch Auswählen einer Anzahl der mehreren Quellen (121-124) mit den niedrigsten Werten bei der Pseudoentfernungskorrektur.

10. Verfahren nach einem der vorhergehenden Ansprüche, das ferner Folgendes umfasst:

Bereitstellen eines Mehrwegabschwächungsmoduls (443) mit der Pseudoentfernungskorrektur für jede der mehreren Quellen (121-124),
wobei der Empfänger (110) das Mehrwegabschwächungsmodul (443) zum Erkennen von Mehrwegeffekten in den empfangenen Positionssignalen aufweist.

11. Verfahren nach einem der vorhergehenden Ansprüche, bei dem die ursprünglichen Pseudoentfernungen für verschiedene der mehreren Quellen (121-124) um einen gleichen Anpassungswert angepasst werden.

12. Nichtflüchtiges computerlesbares Speichermedium, das ein Computerprogramm speichert, welches bei Ausführung auf einem Prozessor diesen dazu veranlasst, ein Verfahren zur Verwendung bei einem Empfänger (110) auszuführen, der so konfiguriert ist, dass er Positionssignale empfängt, wobei das Verfahren Folgendes umfasst:

Gewinnen (S301) eines ursprünglichen Pseudoentfernungsmesswerts für jede von mehreren Quellen (121-124), aus denen die Positionssignale empfangen werden, auf der Grundlage der Laufzeit der empfangenen Positionssignale,
Gewinnen (S302) eines ursprünglichen Werts eines Positionsparameters auf der Grundlage der ursprünglichen Pseudoentfernungen,
Gewinnen einer Differenz zwischen dem ursprünglichen Wert des Positionsparameters und einem Referenzwert des Positionsparameters,
Gewinnen einer Parameterabweichung für jede der Quellen (121-124) durch Anpassen der ursprünglichen Pseudoentfernung für die Quelle (121-124) um einen Anpassungswert, Gewinnen (S304) eines angepassten Werts für den Positionsparameter auf der Grundlage der angepassten Pseudoentfernung für die Quelle (121-124) und der ursprünglichen Pseudoentfernungen für einen Rest der mehreren Quellen (121-124) und Gewinnen (S305) einer Abweichung zwischen dem angepassten Wert des Positionsparameters und dem ursprünglichen Wert des Positionsparameters und
Gewinnen (S306) einer Pseudoentfernungskorrektur für jede Quelle (121-124) auf der Grundlage der Differenz zwischen dem ursprünglichen Wert des Positionsparameters und dem Referenzwert des Positionsparameters, der Parameterabweichung für die Quelle (121-124) und des Anpassungswerts.

13. Empfänger (110), der Folgendes umfasst:

ein Empfängermodul (220) zum Empfangen von Positionssignalen aus mehreren Quellen (121-124),
ein Pseudoentfernungsermittlungsmodul zum Gewinnen (S301) eines ursprünglichen Pseudoentfernungsmesswerts zu jeder der mehreren Quellen (121-124) auf der Grundlage der Laufzeit der empfangenen Positionssignale,
ein Positioniermodul (240) zum Gewinnen eines ursprünglichen Werts eines Positionsparameters auf der Grundlage der ursprünglichen Pseudoentfernungen,
ein Parameterdifferenzgewinnungsmodul zum Gewinnen einer Differenz zwischen dem ursprünglichen Wert des Positionsparameters und einem Referenzwert des Positionsparameters,
ein Parameterabweichungsermittlungsmodul zum Gewinnen einer Parameterabweichung für jede der Quellen (121-124) durch Anpassen der ursprünglichen Pseudoentfernung für die Quelle (121-124) um einen Anpassungswert, Gewinnen eines angepassten Werts für den Positionsparameter auf der Grundlage der angepassten Pseudoentfernung für die Quelle (121-124) und der ursprünglichen Pseudoentfernungen für einen Rest der mehreren Quellen (121-124) und Gewinnen einer Abweichung zwischen dem angepassten Wert des Positionsparameters und dem ursprünglichen Wert des Positionsparameters und
ein Pseudoentfernungskorrekturmodul zum Gewinnen einer Pseudoentfernungskorrektur für jede Quelle (121-124) auf der Grundlage der Differenz zwischen dem ursprünglichen Wert des Positionsparameters und dem Referenzwert des Positionsparameters, der Parameterabweichung für die Quelle und des Anpassungswerts.

**14.** Empfänger nach Anspruch 13, wobei der Empfänger (110) so konfiguriert ist, dass er durch Anwenden der Pseudoentfernungskorrektur auf die ursprüngliche Pseudoentfernung eine korrigierte Pseudoentfernung für jede Quelle (121-124) gewinnt, und
wobei das Positionierungsmodul (240) so konfiguriert ist, dass es auf der Grundlage der korrigierten Pseudoentfernungen zu den mehreren Quellen (121-124) korrigierte Positionsinformationen gewinnt.

**15.** Empfänger nach Anspruch 13 oder 14, wobei der Empfänger (110) ferner Folgendes umfasst:

ein Nachverfolgungsmodul (432) zum Nachverfolgen einer Phase des PRN-Codes in einem aus einer der mehreren Quellen (121-124) empfangenen Positionssignal,
wobei das Nachverfolgungsmodul (432) so konfiguriert ist, dass es auf der Grundlage der Pseudoentfernungskorrektur für die Quelle (121-124) eine aktualisierte Phasendrift für die Quelle (121-124) gewinnt und unter Verwendung der aktualisierten Phasendrift die Phase des PRN-Codes bei dem aus der Quelle (121-124) empfangenen Positionssignal nachverfolgt.

**16.** Empfänger nach Anspruch 13, 14 oder 15, wobei der Empfänger (110) für die Verwendung in einem globalen Navigationssatellitensystem (GNSS) konfiguriert ist und es sich bei den mehreren Quellen (121-124) um mehrere Satelliten in dem GNSS handelt.

## Revendications

**1.** Un procédé destiné à une utilisation dans un récepteur (110) configuré de façon à recevoir des signaux de positionnement, le procédé comprenant :

l'obtention (S301) d'une mesure de pseudo-distance initiale à chaque source d'une pluralité de sources (121-124) à partir desquelles les signaux de positionnement sont reçus en fonction du temps de parcours des signaux de positionnement reçus,
l'obtention (S302) d'une valeur initiale d'un paramètre de positionnement en fonction des pseudo-distances initiales,
l'obtention d'une différence entre la valeur initiale du paramètre de positionnement et une valeur de référence du paramètre de positionnement,
l'obtention d'une erreur de paramètre pour chacune des sources (121-124), par l'ajustement (S303) de la pseudo-distance initiale pour la source (121-124) par une valeur d'ajustement, l'obtention (S304) d'une valeur ajustée du paramètre de positionnement en fonction de la pseudo-distance ajustée pour la source (121-124) et les pseudo-distances initiales pour une partie restante de la pluralité de sources (121-124), et l'obtention (S305) d'une erreur entre la valeur ajustée du paramètre de positionnement et la valeur initiale du paramètre de positionnement, et
l'obtention (S306), pour chaque source (121-124), d'une correction de pseudo-distance en fonction de la différence entre la valeur initiale du paramètre de positionnement et la valeur de référence du paramètre de positionnement, l'erreur de paramètre pour la source (121-124) et la valeur d'ajustement.

**2.** Le procédé selon la Revendication 1, comprenant en outre :

la détermination (S502) d'une erreur de paramètre maximale des erreurs de paramètre calculées pour la pluralité de sources (121-124),
où l'obtention (S306) de la correction de pseudo-distance comprend l'obtention (S508) de la correction en fonction de l'erreur de paramètre pour la source, de l'erreur de paramètre maximale et de la valeur d'ajustement.

**3.** Le procédé selon la Revendication 2, où l'obtention (S306) de la correction de pseudo-distance pour chaque source (121-124) comprend :

la génération (S501) d'une liste contenant les erreurs de paramètre pour la pluralité de sources (121-124),
la détermination (S502) de l'erreur de paramètre maximale des erreurs de paramètre dans la liste,
l'obtention (S505) de la correction de pseudo-distance pour une première source de la pluralité de sources (121-124) en fonction de l'erreur de paramètre pour la première source, de l'erreur de paramètre maximale et de la valeur d'ajustement,
la suppression (S507) de l'erreur de paramètre pour la première source de la liste,

la réduction (S506) des erreurs de paramètre pour une partie restante de la pluralité de sources (121-124) dans la liste par un facteur, et

la répétition des opérations d'obtention (S505) de la correction de pseudo-distance pour une source suivante de la pluralité de sources (121-124), la suppression (S507) de l'erreur de paramètre pour ladite source suivante de la liste et la réduction (S506) des erreurs de paramètre pour la partie restante de la pluralité de sources (121-124) dans la liste par le facteur, jusqu'à ce qu'une correction de pseudo-distance ait été obtenue pour chaque source de la pluralité de sources (121-124).

4. Le procédé selon la Revendication 3, où la réduction (S506) des erreurs de paramètre pour la partie restante de la pluralité de sources (121-124) dans la liste par le facteur comprend la division par deux des erreurs de paramètre, et où, si une pluralité de sources (121-124) demeurent dans la liste, l'obtention (S306) de la correction de pseudo-distance pour chaque source comprend l'obtention (S505) de la correction de pseudo-distance en fonction de l'équation suivante :

$$\Delta PR_m = \left( \frac{\Delta R_{\max} \times \Delta R}{2L} \right),$$

et, si une source seulement demeure dans la liste, l'obtention (S306) de la correction de pseudo-distance pour ladite une source restante comprend l'obtention (S508) de la correction de pseudo-distance en fonction de l'équation suivante :

$$\Delta PR_m = \left( \frac{\Delta R_{\max} \times \Delta R}{L} \right),$$

où $\Delta PR_m$ est la correction de pseudo-distance pour la $m^{\text{ième}}$ source, $\Delta Rmax$ est l'erreur de paramètre maximale de la pluralité de sources (121-124) demeurant dans la liste, $\Delta R$ est la différence entre la valeur initiale du paramètre de positionnement et la valeur de référence du paramètre de positionnement, et $L$ est la valeur d'ajustement.

5. Le procédé selon l'une quelconque des Revendications précédentes, où les erreurs de paramètre et les corrections de pseudo-distance sont uniquement obtenues si la différence entre une valeur initiale et la valeur cible du paramètre de positionnement est supérieure à un seuil.

6. Le procédé selon l'une quelconque des Revendications précédentes, où les signaux de positionnement provenant de la pluralité de sources (121-124) comprennent des codes de nombre pseudoaléatoire, PRN, le récepteur (110) comprenant un module de suivi (432) pour le suivi d'une phase du code PRN à l'intérieur d'un signal de positionnement reçu d'une source de la pluralité de sources (121-124), le procédé comprenant en outre :

l'envoi au module de suivi (432) de la correction de pseudo-distance pour la source (121-124),
l'obtention (S602) d'une dérive de phase actualisée pour la source (121-124) en fonction de la correction de pseudo-distance pour la source (121-124), et
le suivi de la phase du code PRN dans le signal de positionnement reçu de la source (121-124) au moyen de la dérive de phase actualisée.

7. Le procédé selon la Revendication 6, comprenant en outre :

l'obtention, avant l'obtention (S602) de la dérive de phase actualisée pour la source (121-124), d'un premier rapport signal sur bruit, SNR, du signal de positionnement pendant le suivi de la phase du code PRN au moyen d'une dérive de phase initiale,
l'obtention (S603), après l'obtention (S602) de la dérive de phase actualisée pour la source (121-124), d'un deuxième SNR du signal de positionnement pendant le suivi de la phase du code PRN au moyen de la dérive de phase actualisée, et
la poursuite (S605), si le deuxième SNR est supérieur au premier SNR (S604), du suivi de la phase de code PRN au moyen de la dérive de phase actualisée, et si le deuxième SNR est inférieur au premier SNR, la poursuite (S606) du suivi de la phase de code PRN au moyen de la dérive de phase initiale.

8. Le procédé selon l'une quelconque des Revendications précédentes, comprenant en outre :

l'obtention d'une pseudo-distance corrigée à chaque source (121-124) par l'application de la correction de pseudo-distance à la pseudo-distance initiale, et
l'obtention d'informations de positionnement corrigées en fonction des pseudo-distances corrigées à la pluralité de sources (121-124), les informations de positionnement contenant le paramètre de positionnement.

9. Le procédé selon la Revendication 8, comprenant en outre :

la sélection des sources de la pluralité de sources (121-124) à utiliser lors de l'obtention des informations de positionnement par la sélection d'un nombre de sources de la pluralité de sources (121-124) possédant des valeurs les plus basses de la correction de pseudo-distance.

10. Le procédé selon l'une quelconque des Revendications précédentes, comprenant en outre :

l'envoi à un module d'atténuation de trajets multiples (443) de la correction de pseudo-distance pour chaque source de la pluralité de sources (121-124),
où le récepteur (110) comprend le module d'atténuation de trajets multiples (443) destiné à la détection d'effets de trajets multiples dans les signaux de positionnement reçus.

11. Le procédé selon l'une quelconque des Revendications précédentes, où les pseudo-distances initiales pour différentes sources de la pluralité de sources (121-124) sont ajustées par une même valeur d'ajustement.

12. Un support à mémoire lisible par ordinateur non transitoire conservant en mémoire un programme informatique qui, lorsqu'il est exécuté sur un processeur, amène le processeur à exécuter un procédé destiné à une utilisation dans un récepteur (110) configuré de façon à recevoir des signaux de positionnement, le procédé comprenant :

l'obtention (S301) d'une mesure de pseudo-distance initiale à chaque source d'une pluralité de sources (121-124) à partir desquelles les signaux de positionnement sont reçus en fonction du temps de parcours des signaux de positionnement reçus,
l'obtention (S302) d'une valeur initiale d'un paramètre de positionnement en fonction des pseudo-distances initiales,
l'obtention d'une différence entre la valeur initiale du paramètre de positionnement et une valeur de référence du paramètre de positionnement,
l'obtention d'une erreur de paramètre pour chacune des sources (121-124), par l'ajustement (S303) de la pseudo-distance initiale pour la source (121-124) par une valeur d'ajustement, l'obtention (S304) d'une valeur ajustée du paramètre de positionnement en fonction de la pseudo-distance ajustée pour la source (121-124) et des pseudo-distances initiales pour une partie restante de la pluralité de sources (121-124), et l'obtention (S305) d'une erreur entre la valeur ajustée du paramètre de positionnement et la valeur initiale du paramètre de positionnement, et
l'obtention (S306), pour chaque source (121-124), d'une correction de pseudo-distance en fonction de la différence entre la valeur initiale du paramètre de positionnement et la valeur de référence du paramètre de positionnement, l'erreur de paramètre pour la source (121-124) et la valeur d'ajustement.

13. Un récepteur (110) comprenant :

un module de réception (220) destiné à la réception de signaux de positionnement provenant d'une pluralité de sources (121-124),
un module de détermination de pseudo-distance destiné à l'obtention d'une mesure de pseudo-distance initiale à chaque source de la pluralité de sources (121-124) en fonction du temps de parcours des signaux de positionnement reçus,
un module de positionnement (240) destiné à l'obtention d'une valeur initiale d'un paramètre de positionnement en fonction des pseudo-distances initiales,
un module d'obtention d'une différence de paramètre destiné à l'obtention d'une différence entre la valeur initiale du paramètre de positionnement et une valeur de référence du paramètre de positionnement,

un module de détermination d'erreur de paramètre destiné à l'obtention d'une erreur de paramètre pour chacune des sources (121-124), par l'ajustement de la pseudo-distance initiale pour la source (121-124) par une valeur d'ajustement, à l'obtention d'une valeur ajustée du paramètre de positionnement en fonction de la pseudo-distance ajustée pour la source (121-124) et des pseudo-distances initiales pour une partie restante de la pluralité de sources (121-124), et à l'obtention d'une erreur entre la valeur ajustée du paramètre de positionnement et la valeur initiale du paramètre de positionnement, et

un module de correction de pseudo-distance destiné à l'obtention, pour chaque source (121-124), d'une correction de pseudo-distance en fonction de la différence entre la valeur initiale du paramètre de positionnement et la valeur de référence du paramètre de positionnement, l'erreur de paramètre pour la source et la valeur d'ajustement.

**14.** Le récepteur selon la Revendication 13, où le récepteur (110) est configuré de façon à obtenir une pseudo-distance corrigée à chaque source (121-124) par l'application de la correction de pseudo-distance à la pseudo-distance initiale, et

où le module de positionnement (240) est configuré de façon à obtenir des informations de positionnement corrigées en fonction des pseudo-distances corrigées à la pluralité de sources (121-124).

**15.** Le récepteur selon la Revendication 13 ou 14, le récepteur (110) comprenant en outre :

un module de suivi (432) pour le suivi d'une phase du code PRN à l'intérieur d'un signal de positionnement reçu d'une source de la pluralité de sources (121-124),

où le module de suivi (432) est configuré de façon à obtenir une dérive de phase actualisée pour la source (121-124), en fonction de la correction de pseudo-distance pour la source (121-124), et à suivre la phase du code PRN dans le signal de positionnement reçu de la source (121-124) au moyen de la dérive de phase actualisée.

**16.** Le récepteur selon la Revendication 13, 14 ou 15, où le récepteur (110) est configuré pour une utilisation dans un système mondial de navigation par satellite, GNSS, et la pluralité de sources (121-124) est une pluralité de satellites dans le système GNSS.

FIG. 1

FIG. 2

START

S301 — CALCULATE INITIAL
PSEUDORANGES

S302 — CALCULATE
POSITIONING
PARAMETER

S303 — APPLY KNOWN
DRIFT TO INITIAL
PSEUDORANGE FOR
EACH SATELLITE

S304 — CALCULATE
ADJUSTED
PARAMETER FOR
EACH SATELLITE

S305 — CALCULATE
PARAMETER ERROR
FOR EACH SATELLITE

S306 — DETERMINE
PSEUDORANGE
CORRECTIONS

END

*FIG. 3*

I/Q DATA    230    ASSISTED DATA

260

431    CARRIER PHASE TRACKING    CODE TRACKING    432

433    PSEUDORANGE MEASUREMENTS

NAVIGATION DATA    PR

REGULATOR MODULE

240

441    SATELLITE POSITION, VELOCITY & CORRECTION

442    SATELLITE SELECTION

443    MULTIPATH MITIGATION

444    PVT ESTIMATION

470    FILTERING

CORRECTED PVT INFORMATION

*FIG. 4*

START

S501 — GENERATE LIST OF PARAMETER ERRORS

S502 — DETERMINE MAX PARAMETER ERROR IN LIST

S507 — REMOVE SATELLITE FROM LIST

S503 — SELECT SATELLITE HAVING MAX PARAMETER ERROR

S506 — HALVE THE PARAMETER OFFSET VALUE

S504 — IS SATELLITE LAST ON LIST?

NO

S505 — $\Delta PR_m = (\Delta R_{max} \times \Delta R)/2L$

YES

S508 — $\Delta PR_m = (\Delta R_{max} \times \Delta R)/L$

END

*FIG. 5*

START

S601 — CONVERT ΔPR TO PHASE DELAY DRIFT

S602 — ADJUST E, P, L CORRELATORS ACCORDINGLY

S603 — DETERMINE SNR WHILE TRACKING SIGNAL USING NEW PHASE DELAY

S604 — $SNR_{new} > SNR_{old}$

NO

YES

S605 — TRACK SIGNAL USING NEW PHASE DELAY

TRACK SIGNAL USING OLD PHASE DELAY — S606

END

END

*FIG. 6*

**EP 2 562 561 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5978735 A
- US 5680140 A

- US 20070159384 A1